(19) Europäisches Patentamt
European Patent Office
Office européen des brevets

(11) EP 2 338 350 B1

(12) EUROPEAN PATENT SPECIFICATION

(45) Date of publication and mention
of the grant of the patent:
06.04.2016 Bulletin 2016/14

(51) Int Cl.:
A23L 29/00 *(2016.01)*   A23C 9/123 *(2006.01)*

(21) Application number: 10196959.0

(22) Date of filing: 24.12.2010

(54) **FERMENTED DAIRY PRODUCT**

FERMENTIERTES MILCHPRODUKT MIT LEBENSFÄHIGEN PROBIOTISCHEN BAKTERIEN

PRODUIT LAITIER FERMENTÉ COMPRENANT DES BACTÉRIES PROBIOTIQUES VIABLES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.12.2009 EP 09180767**

(43) Date of publication of application:
**29.06.2011 Bulletin 2011/26**

(73) Proprietor: **CSK Food Enrichment B.V.
8938 AS Leeuwarden (NL)**

(72) Inventors:
• **Meijer, Willem Cornelis**
**6712 HA Ede (NL)**
• **Brandsma, Johannes Bernhard**
**8398 GL Blesdijke (NL)**
• **Hafkamp, Albertus Antonius Gerardus**
**6974 AV Leuvenheim (NL)**
• **Kevelam, Jan**
**6718 HR Ede (NL)**

(74) Representative: **Nederlandsch Octrooibureau
P.O. Box 29720
2502 LS The Hague (NL)**

(56) References cited:
EP-A1- 2 112 219      WO-A1-2008/148561
WO-A2-98/54337       WO-A2-2010/023290
RU-C1- 2 163 445

• CARLSSON ET AL.: "The feasibility of serving liquid yoghurt supplemented with probiotic bacteria, Lactobacillus rhamnosus LB 21, and Lactococcus lactis L1A- a pilot study among old people with dementia in a residential care facility", THE JOURNAL OF NUTRITION, HEALTH & AGING, vol. 13, November 2009 (2009-11), pages 813-819, XP002589717, DOI: 10.1007/s12603-009-0218-3
• VINDEROLA C G ET AL: "Interactions Among Lactic Acid Starter and Probiotic Bacteria Used for Fermented Dairy Products", JOURNAL OF DAIRY SCIENCE, AMERICAN DAIRY SCIENCE ASSOCIATION, US, vol. 85, no. 4, 1 April 2002 (2002-04-01), pages 721-729, XP027045739, ISSN: 0022-0302 [retrieved on 2002-04-01]
• SACCARO ET AL.: "The viability of three probiotic organisms grown with yoghurt starter cultures during storage for 21 days at 4 deg. C", INTERNATIONAL JOURNAL OF DAIRY TECHNOLOGY, vol. 62, August 2009 (2009-08), pages 397-404, XP002589718, DOI: 10.1111/j.1471-0307.2009.00497.x

**Description**

**Field of the invention**

The present invention relates to a fermented dairy product, in particular a yogurt-based composition, comprising viable bacteria of a yogurt starter culture, a helper strain and optionally a probiotic culture. The optional probiotic culture preferably comprises one or more strains selected from the group consisting of *Bifidobacterium* spp. and *Lactobacillus rhamnosus.* The invention also relates to a method for preparing said fermented dairy product.

**Background of the invention**

The production of yogurt generally involves inoculation of milk with a yogurt starter culture and incubating the mixture at a suitable temperature which usually ranges between 30 °C and 45 °C. The yogurt starter culture comprises lactic acid bacteria. Fast acidification of milk inoculated with a yogurt starter is considered advantageous at least for some applications. EP 0985043 discloses methods of enhancing the growth rate and/or controlling the metabolic activity of lactic acid bacteria and of improving the shelf life and/or the quality of an edible product using lactic acid bacterial organisms which are defective in their pyruvate metabolism.

WO 2008/148561A1 describes a method for preparation of a fermented milk product comprising Bifidobacteria and *Streptococcus thermophilus* bacteria, wherein the the *S. thermophilus* bacteria improve the growth of het Bifidobacteria during fermentation.

EP 2112219A1 relates to novel lactic acid bacteria of the genus *Lactococcus* that: 1) has fermentability which curdles of a 10 w% reconstituted skim milk, 2) improves the growth of *Bifidobacterium longum,* and 3) improves the survivability of *Bifidobacterium longum.*

EP 2010023290A2 pertains a method for preparation of a fermented milk product comprising *Bifidobacteria* in combination with lactic acid bacteria of the species *Lactococcus lactis, Streptococcus thermophilus,* and/or *Lactobacillus bulgaricus.*

WO 9854337 describes methods for enhancing the growth rate and/or controlling the metabolic activity of lactic acid bacteria and of improving the shelf life and/or quality of an edible product using lactic acid bacteria which are defective in their private metabolism.

Fermented dairy products, such as yogurts, may optionally further comprise viable probiotic bacteria in addition to the yogurt starter and optionally further bacteria. Probiotic bacteria are known *per se* and preferably relate to bacteria of *Bifidobacterium* species or of *Lactobacillus rhamnosus.* Fermented dairy products comprising priobiotic bacteria have also been known for a long time. An extensive review of probiotic yogurts is provided in "Yogurt as probiotic carrier food", A. Lourens-Hattingh et al., International Dairy Journal 11 (2001), 1-17. In general, the food industry has targeted populations of at least $10^6$ cfu/g at the time of consumption of the probiotic strain that has been added to the food. This is a hard target to meet since probiotic bacteria are generally sensitive species. In paragraph 7.2.3 of the above-mentioned review article, it is mentioned that *"S. thermophilus,* acting as an oxygen scavenger, creates an anaerobic environment and may enhance growth and survival of *Bifidobacterium* when used together in starter cultures".

**Summary of the invention**

The prior art helper strains of EP 0985043 are very specific in that they need metabolic engineering and/or mutation for their conception and are not able to grow under anaerobic conditions.

Hence there is a need for improved yogurt production methods capable of providing enhanced acidification rate of the yogurt starter culture, and if probiotic cultures are further present, enhancing survivability rate thereof. Further it is an object of the invention to provide an improved yogurt production method involving the use of helper strains which are more universally applicable than those disclosed in EP 0985043.

It has surprisingly been found that acidification rate of a yogurt starter culture can be markedly enhanced in a method for preparing a fermented dairy product comprising the steps of:

   a. providing milk;
   b. providing viable bacteria of each of a yogurt starter culture and a helper strain; wherein the yogurt starter culture preferably comprises a strain of *Streptococcus thermophilus* in combination with a strain of *Lactobacillus delbrueckii* spp. *bulgaricus* and/or a strain of *Lactobacillus acidophilus;* and wherein the helper strain is a bacterial strain capable of reducing the redox potential (Eh) of sterilized skim milk to -50 mV or lower, wherein 'lower' means to more negative values, upon incubation of sterilized skim milk with said helper strain for 5-24 hours at 25-33 °C;
   c. adding said viable bacteria to said milk, thereby providing inoculated milk; and
   d. incubating the inoculated milk until the pH of the composition has dropped to 5.0 or lower, thereby obtaining the fermented dairy product;

wherein the helper strain is a Gram positive, non-spore-forming, anaerobic, catalase negative lactococcal strain forming lactic acid as an end product of its carbohydrate metabolism, and the helper strain is mesophilic, and wherein at least one of the following provisos applies:

i. the inoculated milk in (d) is incubated at a temperature of 40-45 °C;
ii. the inoculated milk in (d) is incubated at a temperature of 37-45 °C, and the helper strain is not selected from the group consisting of
*Lactococcus lactis* DSM21407 or a mutant or a variant thereof,
*Lactococcus lactis* DSM21406 or a mutant or a variant thereof,
*Lactococcus lactis* subsp. *lactis* MCC852 (FERM BP-10742);
*Lactococcus lactis* subsp. *lactis* MCC857 (FERM BP-10757);
*Lactococcus lactis* subsp. *lactis* MCC859 (FERM BP-10744);
*Lactococcus lactis* subsp. *lactis* MCC865 (FERM BP-10745); and
*Lactococcus lactis* subsp. *lactis* MCC856 (FERM BP-10746).

Accordingly it has been observed that the helper strain, even if it is not capable *per se* of reducing the redox potential (Eh) of sterilized skim milk to -50 mV or more negative values upon incubation of sterilized skim milk with said helper strain for 5 hours at or above the incubation temperature employed in (d), especially at or above 42 °C, is capable of lowering the redox potential of the incubated inoculated milk more rapidly to -50 mV or more negative values in combination with the yoghurt starter culture. Advantageously, the properties of the fermented dairy product, in particular with regard to texture thereof, are not significantly and/or unfavorably affected. Thus is it presumed that the helper strain may synergistically interact with the yogurt starter culture to lower the redox potential of the incubated inoculated milk composition more rapidly. This effect may be enhanced in case one or more probiotic cultures are present.
Thus in one aspect the invention concerns the use of a helper strain for preparing a fermented dairy product milk wherein the helper strain is a bacterial strain capable of reducing the redox potential (Eh) of sterilized skim milk to -50 mV or lower values upon incubation of sterilized skim milk with said helper strain for 5-24 hours at 25-33 °C and wherein the helper strain is not capable of reducing the redox potential (Eh) of sterilized skim milk to -50 mV or more negative values upon incubation of sterilized skim milk with said helper strain for 5 hours at 42 °C and wherein the helper strain is a Gram positive, non-spore-forming, anaerobic, catalase negative lactococcal strain forming lactic acid as an end product of its carbohydrate metabolism, and the helper strain is mesophilic, and wherein at least one of the following provisos applies:

i. the incubation temperature is 40-45 °C; and/or
ii. the incubation temperature is 37-45 °C, and the helper strain is not selected from the group consisting of
*Lactococcus lactis* DSM21407 or a mutant or a variant thereof,
*Lactococcus lactis* DSM21406 or a mutant or a variant thereof,
*Lactococcus lactis* subsp. *lactis* MCC852 (FERM BP-10742);
*Lactococcus lactis* subsp. *lactis* MCC857 (FERM BP-10757);
*Lactococcus lactis* subsp. *lactis* MCC859 (FERM BP-10744);
*Lactococcus lactis* subsp. *lactis* MCC865 (FERM BP-10745); and
*Lactococcus lactis* subsp. *lactis* MCC856 (FERM BP-10746).

.
Especially enhanced acidification rate - in particular a reduced lag time - can be obtained whilst the properties of the fermented dairy product are not significantly and/or negatively influenced, especially with regard to texture. In particular a smooth texture may be obtained which is essentially free of lumps. The lag time is defined as the time required for obtaining, after the start of a fermentation, an initial pH reduction of 0.08 pH units.
It is especially further noted that if step (d) is performed below 37 °C, for example at 32 °C, the acidification rate is also enhanced by the presence of the helper strain. However in that case unwanted side effects are obtained, especially with regard to texture of the fermented dairy product obtained.
The invention also provides a fermented dairy product comprising viable bacteria of:

- a yogurt starter culture comprising a strain of *Streptococcus thermophilus* in combination with a strain of *Lactobacillus delbrueckii* spp. *bulgaricus* and/or a strain of *Lactobacillus acidophilus*; and
- a helper strain, wherein the helper strain is a bacterial strain capable of reducing the redox potential (Eh) of sterilized skim milk to -50 mV or lower, wherein 'lower' means to more negative values, upon incubation of sterilized skim milk with said helper strain for 5-24 hours at 25-33 °C;

wherein the helper strain is a Gram positive, non-spore-forming, anaerobic, catalase negative lactococcal strain forming lactic acid as an end product of its carbohydrate metabolism, and wherein the helper strain is mesophilic, and wherein the helper strain is not selected from the group consisting of
*Lactococcus lactis* DSM21407,
*Lactococcus lactis* DSM21406,
*Lactococcus lactis* subsp. *lactis* MCC852 (FERM BP-10742)
*Lactococcus lactis* subsp. *lactis* MCC857 (FERM BP-10757)
*Lactococcus lactis* subsp. *lactis* MCC859 (FERM BP-10744)
*Lactococcus lactis* subsp. *lactis* MCC865 (FERM BP-10745), and
*Lactococcus lactis* subsp. *lactis* MCC856 (FERM BP-10746).

It is noted that the helper strain as defined in the method according to the invention or in the fermented dairy product according to the invention, unlike the strains of EP 0985043, comprises or more preferably consists of lactococcal strains which are capable of acidifying milk under essentially anaerobic conditions at about their optimum growth temperature. The helper strains as defined in the present method or in the present fermented dairy product comprise or more preferably consist of strains which are not defective with respect to pyruvate formate lyase or lactate dehydrogenase activity. It is expressly noted that the helper strain and the fermented dairy product preferably do not contain an added strain of *Lactococcus lactis* spp. *lactis* strain DN224 (deposited as DSM 11037) or an added strain of DN223 (deposited as DSM 11036). Alternatively or additionally the helper strain and the fermented dairy product preferably comprise viable bacteria of lactococci which are defective with respect to pyruvate formate lyase or lactate dehydrogenase activity, especially strains of DN224 or DN223 as defined above, in an amount of less than $10^4$ cfu/g, preferably less than $10^3$ cfu/g.

In addition to the indicated effect of the helper strain on acidification rate (in particular lag time) of a yogurt starter, it has been surprisingly found that survival of strains of an optionally further present probiotic culture can be markedly enhanced, even if the helper strain is not capable of reducing the redox potential (Eh) of sterilized skim milk, following incubation of sterilized skim milk with said helper strain (*per se*) for 5 hours at or above the incubation temperature employed in (d), especially at or above 42 °C, to -50 mV or more negative values. Accordingly the inoculation rate of the probiotic culture can be reduced. Thus in the method for preparing the fermented dairy product, step (b) preferably further comprises providing a further probiotic culture which preferably comprises one or more strains selected from the group consisting of *Bifidobacterium* and *Lactobacillus rhamnosus.*

However since the probiotic culture is not an essential feature of the method in its broadest scope, there is also provided an embodiment of the method with the proviso that in (b) no viable bacteria of a probiotic culture are provided, especially no probiotic culture comprising one or more strains selected from the group consisting of *Bifidobacterium* and *Lactobacillus rhamnosus.*

From the above-mentioned observation regarding survival of probiotic strains, it follows that the fermented dairy product preferably further comprises viable bacteria of a probiotic culture, preferably comprising one or more strains selected from the group consisting of *Bifidobacterium* and *Lactobacillus rhamnosus.*

Again, since the probiotic culture is not an essential feature of the fermented dairy product in its broadest scope, there is also provided an embodiment of the fermented dairy product with the proviso that the fermented dairy product comprises essentially no viable bacteria of a probiotic culture, especially essentially no viable bacteria of a probiotic culture comprising one or more strains selected from the group consisting of *Bifidobacterium* and *Lactobacillus rhamnosus.*

The helper strain is not selected from the group consisting of:

*Lactococcus lactis* DSM21407,
*Lactococcus lactis* DSM21406,
*Lactococcus lactis* subsp. *lactis* MCC852 (FERM BP-10742)
*Lactococcus lactis* subsp. *lactis* MCC852 (FERM BP-10742)
*Lactococcus lactis* subsp. *lactis* MCC857 (FERM BP-10757)
*Lactococcus lactis* subsp. *lactis* MCC859 (FERM BP-10744)
*Lactococcus lactis* subsp. *lactis* MCC865 (FERM BP-10745), and
*Lactococcus lactis* subsp. *lactis* MCC856 (FERM BP-10746).

These strains are disclaimed in view of WO 2010/023290 and EP 2112219, respectively.

In an embodiment, the helper strain is not a mutant or variant of DSM21407 and is not a mutant or variant of DSM21406. In the present context, the term "mutant" should be understood as a strain derived from DSM21407 or DSM21406 by means of e.g. genetic engineering, radiation and/or chemical treatment and that is functionally equivalent, in particular with respect.to enhancing the growth of a Bifidobacterium cell in a milk medium. Especially, the term "mutant" refers to a strain obtained by subjecting DSM21407 or DSM21406 to any conventionally used mutagenization treatment including treatment with a chemical mutagen such as ethane methane sulphonate (EMS) or N-methyl-N'-nitro-N-nitroguanidine (NTG), UV light or to a spontaneously occurring mutant. In the present context, the term "variant" should be understood as a strain which is functionally equivalent to DSM21407 or DSM21406, in particular with respect.to enhancing the growth of a Bifidobacterium cell in a milk medium. The variant should belong to the same species as DSM21407 or DSM21406.

WO 2010/023290 discloses *Lactococcus lactis* strains capable of enhancing growth of a *Bifidobacterium* strain. Said strains are preferably selected as CHCC4462 (DSM21407) or as CHCC3912 (DSM21406). In addition, WO 2010/023290 discloses *Streptococcus thermophilus* strains capable of enhancing growth of a *Bifidobacterium* strain, such as CHCC7018.

EP 2112219 discloses bacteria of the genus *Lactococcus* having amongst others *Bifidobacterium longum* growth-promoting properties. The following are disclosed explicitly:

*Lactococcus lactis* subsp. *lactis* MCC852 (FERM BP-10742)
*Lactococcus lactis* subsp. *lactis* MCC852 (FERM BP-10742)
*Lactococcus lactis* subsp. *lactis* MCC857 (FERM BP-10757)
*Lactococcus lactis* subsp. *lactis* MCC859 (FERM BP-10744)
*Lactococcus lactis* subsp. *lactis* MCC865 (FERM BP-10745), and
*Lactococcus lactis* subsp. *lactis* MCC856 (FERM BP-10746).

It is noted that neither WO 2010/023290 nor EP 2112219 discloses an effect of redox potential on acidification rate or survivability of other bacteria.

## Detailed description of the invention

### Definitions

In the present description "mesophilic" is used to indicate lactic acid bacteria which exhibit an optimum growth at or below about 33 °C, preferably at between *about* 15 and *about* 33 °C. "Thermophilic" is used to indicate lactic acid bacteria which exhibit an optimum growth at between about 33 °C and about 45 °C, more in particular between 37 °C to 45 °C.

The redox potential, or oxidation-reduction potential (Eh) is a parameter, suitably here expressed in mV, which is known to the skilled person and is preferably defined as the measure of the ability of a (bio)chemical system to oxidise or reduce. Oxidized and reduced states are respectively indicated by positive and negative mV values. The Eh value of fresh milk is about +150 mV to +300 mV. Eh values reported herein are determined using a redox meter comprising a redox electrode capable of measuring oxido-reduction potential of a sample (Em, mV) and a reference electrode, and calculated as $Eh = Em + Er$, wherein Eh (in mV) is the electrode potential referred to the normal hydrogen electrode, Em (in mV) the measured oxido-reduction potential of the sample, and Er the potential (in mV) of the reference electrode (preferably Ag/AgCl) at the temperature of fermentation. Preferably, Eh is determined according to the method described in "Redox potential to discriminate among species of lactic acid bacteria", M. Brasca et al., J. Applied Microbiology (2007), 103:1516-1524, which method is herein incorporated by reference.

In this document and in its claims, the verb "to comprise" and its conjugations is used in its non-limiting sense to mean that items following the word are included, but items not specifically mentioned are not excluded. In addition, reference to an element by the indefinite article "a" or "an" does not exclude the possibility that more than one of the element is present, unless the context clearly requires that there be one and only one of the elements. The indefinite article "a" or "an" thus usually means "at least one".

The term "lactic acid bacteria" is known to the person skilled in the art and may preferably be defined as Gram positive, non-spore-forming, anaerobic, catalase negative cocci or rods forming lactic acid as an end product of their carbohydrate metabolism.

The milk provided in step (a) can be any type of milk, preferably is milk from a cow or a goat or a sheep or is soy milk. Preferably the provided in step (a) is cow's milk. In an embodiment the provided in step (a) is skim milk. Preferably the milk provided in step (a) is pasteurised skim milk.. In an embodiment, the milk provided in step (a.) is sterilized skim milk

### The yogurt starter culture

In an embodiment, the yogurt starter comprises a strain of *Streptococcus thermophilus* in combination with a strain of *Lactobacillus delbrueckii* spp. *bulgaricus.* Accordingly, a traditional yogurt-type product can be obtained. In another embodiment, the yogurt starter comprises a strain of *Streptococcus thermophilus* in combination with a strain of *Lactobacillus acidophilus.* Accordingly, a mild yogurt-type product can be obtained. Any of these strains are or may be known *per se.*

The strain of *Streptococcus thermophilus* is preferably not ST6008, deposited as DSM18111.

The optional probiotic culture

The probiotic culture, if present, preferably comprises a strain of *Bifidobacterium.* This *Bifidobacterium* strain preferably belongs to a species selected from the group consisting of *Bifidobacterium adolescentis, Bifidobacterium animalis, Bifidobacterium asteroids, Bifidobacterium bifidum, Bifidobacterium breve, Bifidobacterium catenulatum, Bifidobacterium infantis, Bifidobacterium lactis, Bifidobacterium longum* and *Bifidobacterium pseudocatenulatum*, and it is especially preferred that said *Bifidobacterium* strain is a strain of *Bifidobacterium lactis* or of *Bifidobacterium animalis* spp. *lactis.* Examples of strains are strains selected from the group consisting of CHCC5445 (BB-12) with accession number DSM15954, CHCC7158 (HN019, deposit number DSM17280), *Bifidobacterium animalis* strain deposited as ATCC 27536, *Bifidobacterium infantis* strain Bbi99 (DSM 13692), BB-420, BI-04, CHCC2037, LAFTI B-94, DN 173 010, STB- 2938, R0071, R0175, and BB-46, and a mutant of any of these strains. Alternatively, and preferably, the *Bifidobacterium* strain is a tetracycline-sensitive strain of *Bifidobacterium animalis* spp. *lactis;* such a strain is preferably deposited as DSM 18735 (CHCC 9870) or as DSM 18776 (CHCC 9884) or is a mutant strain thereof, said mutant strain being obtainable by using any of the deposited strains CHCC 9870 and CHCC 9884 as starting material. Preferably said starting material is submitted to the procedure described in WO2008058854, in particular according to the examples and claim 1 of WO2008058854, and said mutant strain have a minimum inhibitive concentration (MIC) of 1.5 microgram tetracycline/ml or less.

In an alternative embodiment, the probiotic culture preferably comprises a strain of *Lactobacillus rhamnosus,* which for example may be conveniently provided as LGG, which is deposited as ATCC53103, and may be obtained ex Valio.

The helper strain

The helper strain is preferably a bacterial strain capable of reducing the redox potential (Eh) of sterilized skim milk upon incubation of sterilized skim milk with said helper strain for 5-24 hours at 25-45 °C, especially at 25-33 °C, to -100 mV or lower (more negative) values, even more preferably to -150 mV or lower (more negative) values, most preferably to -200 mV or lower (more negative) values or even to -250 mV or lower (more negative) values. For practical purposes, the redox potential is preferably-500 mV or a higher (less negative value), more preferably -400 mV or a higher (less negative) value.

The required redox potential (Eh) is preferably reached after 5-12 hours, most preferably after approximately 5 hours incubation. Without being bound by theory, it is believed that the faster a negative redox potential is achieved, the better it is for survival of the probiotic culture. The helper strain may be mesophilic, in that case the redox potential is preferably determined at a temperature of 25-33 °C, for example at around 27 °C. For a thermophilic helper strain, the redox potential is preferably determined at a temperature of 34-45 °C, for example at around 37 °C.

A mesophilic helper strain is preferably not capable of reducing the redox potential (Eh) of sterilized skim milk to -50 mV or more negative values upon incubation of the milk provided in step (a) with said helper strain for 5 hours at or above 42 °C. It is furthermore especially preferred that in the method for preparing the fermented dairy product, the mesophilic helper strain is not capable of reducing the redox potential (Eh) of sterilized skim milk, to -50 mV or to -100 mV or more negative values upon incubation of the milk provided in step (a) with said helper strain for 5 hours at or above the temperature at which the milk is incubated in (d). Herein the redox potential (Eh) of the milk provided in step (a) is preferably between +100 and +300 mV prior to incubation.

The helper strain preferably comprises or even more preferably consists of lactic acid bacteria.

The helper strain preferably comprises or even more preferably consists of mesophilic bacteria.

In an especially preferred embodiment, the helper strain comprises a mesophilic strain of *Lactococcus,* more preferably of *Lactococcus lactis,* in particular *Lactococcus lactis* spp. *lactis.* or *Lactococcus lactis* spp. *cremoris.* Such a strain is thought to be excellently suitable for creating favourable survival conditions and/or growth conditions for the probiotic culture in the fermented dairy product. In particular such a strain is preferred in any method for preparing the fermented dairy product according to the invention wherein incubation is at 30-37 °C, for example and preferably at 30-33 °C. Alternatively, even if the mesophilic helper strain may be less capable or even incapable of reducing the redox potential (Eh) of the milk provided in step (a) during incubation at 37-45 °C, more preferably at 40-45 °C, it may still be effectively used in any method for preparing the fermented dairy product according to the invention wherein incubation is at 37-45 °C, more preferably at 40-45 °C. It has been particularly observed that the redox potential of milk inoculated with the yogurt starter, with the probiotic culture and with a mesophilic helper strain and incubated at 37-45 °C, especially at 40-45 °C, may be lowered much more rapidly and/or to lower (more negative) values as compared with the same inoculated milk composition not comprising the mesophilic helper strain. The observed synergy is thought to further contribute to improving survival of the probiotic culture.

The helper strain preferably comprises a proteinase-positive bacterial strain. Preferably, one or more of the indicated preferred helper strains are proteinase positive (prt[+]). Advantageously, even better survival conditions for the bifidobacteria can be created.

Species of preferred helper strains are known *per se* and are conveniently described in for example R. Cachon et al. Lait (2002), 82:281-288 or M. Brasca et al., J. Applied Microbiology (2007), 103:1516-1524.

In an embodiment, the helper strain and/or the fermented dairy product (preferably both) contain(s) a viable cell count of less than $10^6$ cfu/g, more preferably of less than $10^5$ cfu/g, most preferably of less than $10^4$ cfu/g (relative to the weight of the helper strain and the fermented dairy product, respectively) of each of *Propionibacterium freudenreichii* spp. *shermanii* and/or of *Propionibacterium jensenii.* The helper strain and/or the fermented dairy product (preferably both) may in an embodiment not contain any detectable amounts of viable strains of said propionibacteria at all.

The helper strain is preferably not capable to ferment xylose, especially D-xylose, preferably as determined using a medium for sugar fermentation as disclosed by Mitsuoka (Tomatori Mitsuoka, The bacteriology of lactic acid bacteria, Clinical Examination 18, pp. 1163-1172; 1974) or alternatively as determined using an API 50 CH test kit.

The helper strain is not selected from the group consisting of *Lactococcus lactis* subsp. *lactis* MCC852 (FERM BP-10742), *Lactococcus lactis* subsp. *lactis* MCC852 (FERM BP-10742), *Lactococcus lactis* subsp. *lactis* MCC857 (FERM BP-10757), *Lactococcus lactis* subsp. *lactis* MCC859 (FERM BP-10744), *Lactococcus lactis* subsp. *lactis* MCC865 (FERM BP-10745), *Lactococcus lactis* subsp. *lactis* MCC856 (FERM BP-10746).

The helper strain is not selected from the group consisting of *Lactococcus lactis* DSM21407 and *Lactococcus lactis* DSM21406. In an embodiment the helper strain is not selected from the group consisting of a mutant or variant of *Lactococcus lactis DSM21407* and of a mutant or variant of *Lactococcus lactis* DSM21406 or a mutant or a variant thereof In this embodiment it is preferred that furthermore the strain of *Streptococcus thermophilus* is not selected from the group consisting of CHCC7018 or a mutant or variant thereof

The helper strain is preferably not selected as a culturally modified lactic acid bacterial cell that has, relative to the cell from which it is derived, an increased content of a porphyrin compound. Additionally, or more preferably alternatively, the helper strain contains less than 0.1 ppm on dry matter basis of cytochrome d and/or less than 40 ppm more preferably less than 30 ppm yet more preferably less than 20 ppm, less than 10 ppm or less than 5 ppm on dry matter basis of a porphyrin compound, preferably haemin. In particular the helper strain is not selected as *Lactococcus lactis* DSM12015.

### The fermented dairy product

The fermented dairy product may preferably comprise a total cell count of viable bacteria of the probiotic culture, if present, of at least $1.10^5$, more preferably at least $1.10^6$, most preferably at least $1.10^7$ or even at least $1.10^8$ cfu/g of said product. In practice the total cell count of viable bacteria of the probiotic culture in said fermented dairy product will be lower than $1.10^{12}$ cfu/g of the fermented dairy product. Herein, the expression "viable bacteria of the probiotic culture" preferably reads as *"Bifidobacteria* and/or *bacteria of Lactobacillus rhamnosus"*, more preferably as *"Bifidobacteria"* or as *"Lactobacillus rhamnosus"*, most preferably as *"Bifidobacteria".*

It is further preferred that of each of the yogurt starter strains, the optional probiotic strains and the helper strains used for preparing the fermented dairy product viable bacteria are present in said fermented dairy product. Preferably of the yogurt starter strains $10^4$-$10^{12}$ cfu/g of the fermented dairy product, preferably $10^6$-$10^{12}$ cfu/g of the fermented dairy product are present. Preferably of the optional probiotic strains $10^4$-$10^{12}$ cfu/g of the fermented dairy product, preferably $10^6$-$10^{12}$ cfu/g of the fermented dairy product are present. Preferably of the helper strains $10^3$-$10^{12}$ cfu/g of the fermented dairy product, preferably $10^4$-$10^{12}$ cfu/g of the fermented dairy product are present.

Alternatively or more preferably additionally, the fermented dairy product preferably comprises a total viable cell count of *Lactobacillus delbrueckii* spp. *bulgaricus,* if present, of at least $1.10^6$ cfu/g, more preferably of at least $1.10^7$ cfu/g most preferably of at least $1.10^8$ cfu/g relative to the weight of the fermented dairy product.

In an embodiment, the fermented dairy product may further comprise an added thickener. The added thickener may be an enzyme such as transglutaminase and/or one or more thickening agents which are preferably selected from the group consisting of a starch, a starch derivative, a cellulose derivative, a gelatin, gum arabic, a carrageenan, gellan gum, xanthan gum, guar gum, and locust bean gum. Accordingly, the texture of the fermented dairy product may be further improved.

The fermented dairy product may be a yoghurt-based composition, such as a set or stirred plain yoghurt, a fruit-containing yoghurt composition or a drinking yoghurt. In an especially preferred embodiment, the fermented dairy product is provided as a drinking yoghurt.

The fermented dairy product may comprise an added sweetener, such as an added sugar, a polyol sweetener or an intense sweetener, or mixtures thereof. The polyol sweetener is preferably a sweetener selected from the group consisting of sorbitol and xylitol. The intense sweetener is preferably selected from the group consisting of aspartame, acesulfame-K and a saccharin. The added sugar is preferably selected from the group consisting of glucose and sucrose. In an embodiment, the added sweetener is not fermentable by the yogurt starter culture. Accordingly, post acidification of the fermented dairy product may be reduced. Besides the optional added sweetener and/or the optional added thickener, other additives may be present such as colourants, flavourings, preservatives, a fruit, a fruit preparation, and the like.

The fermented dairy product is preferably packaged in a closed container which is capable to prevent or retard oxygen gas from diffusing from the atmosphere into the fermented dairy product. Preferably, said container further comprises a headspace above the fermented dairy product, wherein preferably more than 90 volume% occupied by the headspace is provided as an inert gas such as nitrogen or carbon dioxide. Accordingly, survival of the probiotic culture is further enhanced.

The method

The method according to the invention may comprise the addition of an additive, for example one or more additives such as a thickener indicated above. Any thickener is added preferably after the pH of the composition has dropped to 5.0 or lower; the optional thickener is preferably defined as above.

The present method may further comprise a homogenizing step so that the fermented dairy product is preferably provided as a drinking yoghurt. The homogenizing step is preferably performed after the desired end pH of the composition has been obtained in (d).

Most preferably the inoculated milk in (d) is incubated at a temperature 42-45 °C and the helper strain is preferably not capable of reducing the redox potential (Eh) of sterilized skim milk upon incubation of sterilized skim milk with said helper strain for 5 hours at 42 °C, to -50 mV or more negative values.

The viable bacteria of the optional probiotic culture are preferably added in an amount of less than $1.10^8$, more preferably in an amount of less than $5.10^7$, most preferably in an amount of less than $1.10^7$ cfu/g with respect to the weight of milk. The viable bacteria of the optional probiotic culture are further preferably added in an amount of $1.10^5$ cfu/g, more preferably in an amount of $1.10^6$ cfu/g or higher with respect to the weight of milk. Herein, the "viable bacteria of the probiotic culture" preferably are *"Bifidobacteria* and/or *bacteria of Lactobacillus rhamnosus"*, more preferably are *"Bifidobacteria"* or are *"Lactobacillus rhamnosus"*, most preferably are *"Bifidobacteria"*.

In the present method, preferably after the desired end pH has been obtained, which generally ranges between 3.5 and 4.6, and after any optional further additives have been added and/or any desired post-processing steps such as homogenizing have been performed, the fermented dairy product thus obtained is cooled down, preferably to 0-25 °C, more preferably to 2-10 °C.

In the present method, the fermented dairy product is preferably packaged in a closed container which is capable to prevent or retard oxygen gas from diffusing from the atmosphere into the fermented dairy product. Preferably, said container further comprises a headspace above the fermented dairy product, wherein preferably more than 90 volume% occupied by the headspace is provided as an inert gas such as nitrogen or carbon dioxide. Accordingly, survival of the probiotic culture is further enhanced.

Combinations of different strains

In a preferred embodiment, the yogurt starter culture comprises a strain of *Streptococcus thermophilus* in combination with a strain of *Lactobacillus delbrueckii* spp. *bulgaricus* and the optional probiotic culture comprises a strain of *Bifidobacterium.*

In another embodiment, the yogurt starter culture comprises a strain of *Streptococcus thermophilus* in combination with a strain of *Lactobacillus delbrueckii* spp. *bulgaricus* and the optional probiotic culture comprises a strain of *Lactobacillus rhamnosus.*

In another embodiment, the yogurt starter culture comprises a strain of *Streptococcus thermophilus* in combination with a strain of *Lactobacillus acidophilus* and the optional probiotic culture comprises a strain of *Bifidobacterium.*

In another embodiment, the yogurt starter culture comprises a strain of *Streptococcus thermophilus* in combination with a strain of *Lactobacillus acidophilus* and the optional probiotic culture comprises a strain of *Lactobacillus rhamnosus.*

## EXAMPLES

Preparation of yogurt milk

To 10 litres of pasteurised skimmed milk (Campina), 200 g skimmed milk powder was added with stirring. After the milk powder had been dissolved, the resulting composition was pasteurised for 5 minutes at 85 °C. The resulting "yogurt milk" was divided in 2 litre portions and cooled down to 32 °C.

Inoculation of yogurt milk

The following cultures were dosed in the indicated amounts (grams) to 2.500 litres of yogurt milk. Unless otherwise indicated, the cultures were provided as frozen pellets and as concentrates comprising a viable cell count of $1.10^{10}$ - $1.10^{11}$ cfu/g of pellet.

    1- 167 g C49 + 167 g C38 + 167 g C42 + 20.000 g CSK 1788*
    2- 167 g C49 + 167 g C38 + 2000 g CSK 2505 + 20.000 gram CSK 1788*
    3- 167 g C49 + 167 g C38 + 167 g C42
    4- 167 g C49 + 167 g C38 + 2000 g CSK 2505
    5- 2000 g CSK 2505
    6- 20.000 CSK 1788*
    7- 167 g C49
    8- 167 g C38

* freshly grown culture;

Hereabove, C49 is a commercially available strain of *Lactobacillus delbrueckii* spp. *bulgaricus,* ex CSK Food Enrichment BV. C38 is a commercially available strain of *Streptococcus thermophilus,* ex CSK Food Enrichment BV. C42 is a commercially available strain of *Bifidobacterium lactis,* ex CSK Food Enrichment BV. CSK 2505 is a strain of *Lactobacillus rhamnosus.* CSK 1788 is a strain of Lactococcus lactis capable of reducing the redox potential (Eh) of pasteurised or sterilized skim milk, following incubation of said milk with said bacterial strain for 6 hours at 32 °C, to ca. - 300 mV. Alternative to CSK 1788, one or more strains of *Lactococcus lactis* spp. *lactis* disclosed in Table 2 of M. Brasca et al, J. Applied Microbiology (2007), 103:1516-1524, especially those capable of lowering the redox potential (Eh) to values of -170 to -200 mV, can be employed.

Each of the inoculated yogurt milk compositions were divided in three 500 mL bottles, each of which (24 bottles in total) were incubated at 32 °C until the pH had dropped to a value of about 4.60.

Hereafter, for each of the 8 obtained yogurts, the pH was further monitored at incubation temperature during 12 hours.

For the remaining 16 bottles, after reaching pH 4.60 the obtained yoghurts were stirred 40 times and afterwards cooled down on a water bath to 25 °C.

For each yogurt composition, the contents of two bottles were joined in beakers and stored at 4 °C in a refrigerator.

Colony counts are determined after 7, 14, 21 and 28 days. The survival of the probiotic bacteria could be markedly enhanced in the presence of the helper strain CSK1788.

The above experiments were repeated using an incubation temperature of 42 °C instead of 32 °C. It was observed that the helper strain CSK 1788 at 5 hours after the start of the incubation could not lower the redox potential of the yogurt milk to negative values (sample 6). It was further observed that after 5 hours incubation at 42 °C, the redox potential of the bifido-containing yogurt was still positive (ca. 20 mV, sample 3). Nevertheless, if the bifido-containing yogurt further contained the helper strain CSK 1788, after 5 hours incubation at 42 °C, the redox potential of the incubated mixture reached a value of - 220 mV (sample 1)!

Also, the redox potential of the yoghurt containing the strain of *Lactobacillus rhamnosus* CSK 2505 was further lowered by - 160 mV by the presence of the helper strain CSK 1788 after 5 hours incubation at 42 °C. Thus, after 5 hours of incubation at 42 °C, the redox potential of sample 2 was 160 mV more negative than the redox potential of sample 4.

The results show that the helper strain CSK 1788 synergistically interacts with the yogurt starter culture and/or with the probiotic culture to lower the redox potential of the incubated yogurt milk.

Again, colony counts are determined after 7, 14, 21 and 28 days. The survival of the probiotic bacteria could be markedly enhanced in the presence of the helper strain CSK1788.

In further studies the above experiments were repeated at the two incubation temperatures indicated, viz. 32 and 42 °C. It was repeatedly found that for samples 1 and 2, typical yogurt attributes - in particular a smooth texture free of lumps - could only be obtained at 42 °C but not at 32 °C.

In yet further studies the above experiments were repeated at the incubation temperature of 42 °C. However, samples 7 and 8 were omitted and another variant introduced:

$$\text{1b-} \quad 167 \text{ g C49} + 167 \text{ g C38} + 20.000 \text{ g CSK 1788 (fresh culture)}.$$

Variant 1b is as sample 1, only without the probiotic culture C42.

It was found that both in the absence or presence of the probiotic culture C42, the presence of the helper strain CSK1788 reduced the lag time significantly, by 40-45 minutes. The lag time is defined as the time required for obtaining, after the start of a fermentation, an initial pH reduction of 0.08 pH units. Furthermore the time required to obtain a pH of 4.5 was reduced by approx. 1.5 hours due to the presence of the helper strain.

## Claims

1. A method for preparing a fermented dairy product comprising the steps of:

   a. providing milk;
   b. providing viable bacteria of each of a yogurt starter culture and a helper strain; wherein the yogurt starter culture comprises a strain of *Streptococcus thermophilus* in combination with a strain of *Lactobacillus delbrueckii* spp. *bulgaricus* and/or a strain of *Lactobacillus acidophilus;* and wherein the helper strain is a bacterial strain capable of reducing the redox potential (Eh) of sterilized skim milk to -50 mV or lower values upon incubation of sterilized skim milk with said helper strain for 5-24 hours at 25-33 °C;
   c. adding said viable bacteria to said milk, thereby providing inoculated milk; and
   d. incubating the inoculated milk until the pH of the composition has dropped to 5.0 or lower, thereby obtaining the fermented dairy product;

   wherein the helper strain is a Gram positive, non-spore-forming, anaerobic, catalase negative lactococcal strain forming lactic acid as an end product of its carbohydrate metabolism, and the helper strain is mesophilic, and wherein at least one of the following provisos applies:

   i. the inoculated milk in (d) is incubated at a temperature of 40-45 °C;
   ii. the inoculated milk in (d) is incubated at a temperature of 37-45 °C, and the helper strain is not selected from the group consisting of
   *Lactococcus lactis* DSM21407 or a mutant or a variant thereof,
   *Lactococcus lactis* DSM21406 or a mutant or a variant thereof,
   *Lactococcus lactis* subsp. *lactis* MCC852 (FERM BP-10742);
   *Lactococcus lactis* subsp. *lactis* MCC857 (FERM BP-10757);
   *Lactococcus lactis* subsp. *lactis* MCC859 (FERM BP-10744);
   *Lactococcus lactis* subsp. *lactis* MCC865 (FERM BP-10745); and
   *Lactococcus lactis* subsp. *lactis* MCC856 (FERM BP-10746).

2. The method according to claim 1, wherein step (b) further comprises providing a further probiotic culture comprising one or more strains selected from the group consisting of *Bifidobacterium* and *Lactobacillus rhamnosus.*

3. The method according to any one of the preceding claims, wherein the helper strain is a bacterial strain capable of reducing the redox potential (Eh) of sterilized skim milk to -200 mV or lower values upon incubation of sterilized skim milk with said helper strain for 5-24 hours at 25-33 °C.

4. The method according to any one of the preceding claims, wherein the inoculated milk in (d) is incubated at a temperature of 40-45 °C, preferably at a temperature of 42-45 °C.

5. The method according to any one of the preceding claims wherein the helper strain is not capable of reducing the redox potential (Eh) of sterilized skim milk to -50 mV or more negative values upon incubation of sterilized skim milk with said helper strain for 5 hours at 42 °C.

6. The method according to any one of the preceding claims, wherein the helper strain is not selected from the group consisting of
*Lactococcus lactis* DSM21407 or a mutant or a variant thereof,
*Lactococcus lactis* DSM21406 or a mutant or a variant thereof,
*Lactococcus lactis* subsp. *lactis* MCC852 (FERM BP-10742)
*Lactococcus lactis* subsp. *lactis* MCC857 (FERM BP-10757)
*Lactococcus lactis* subsp. *lactis* MCC859 (FERM BP-10744)
*Lactococcus lactis* subsp. *lactis* MCC865 (FERM BP-10745), and
*Lactococcus lactis* subsp. *lactis* MCC856 (FERM BP-10746).

7. A fermented dairy product, preferably a yogurt, comprising viable bacteria of:

   - a yogurt starter culture comprising a strain of *Streptococcus thermophilus* in combination with a strain of *Lactobacillus delbrueckii* spp. *bulgaricus* and/or a strain of *Lactobacillus acidophilus*; and
   - a helper strain, wherein the helper strain is a bacterial strain capable of reducing the redox potential (Eh) of sterilized skim milk to -50 mV or lower values upon incubation of sterilized skim milk with said helper strain for 5-24 hours at 25-33 °C;

   wherein the helper strain is a Gram positive, non-spore-forming, anaerobic, catalase negative lactococcal strain forming lactic acid as an end product of its carbohydrate metabolism, and wherein said helper strain is mesophilic, and wherein the helper strain is not selected from the group consisting of
   *Lactococcus lactis* DSM21407,
   *Lactococcus lactis* DSM21406,
   *Lactococcus lactis* subsp. *lactis* MCC852 (FERM BP-10742)
   *Lactococcus lactis* subsp. *lactis* MCC857 (FERM BP-10757)
   *Lactococcus lactis* subsp. *lactis* MCC859 (FERM BP-10744)
   *Lactococcus lactis* subsp. *lactis* MCC865 (FERM BP-10745), and
   *Lactococcus lactis* subsp. *lactis* MCC856 (FERM BP-10746).

8. The fermented dairy product according to claim 7, which further comprises a probiotic culture comprising one or more strains selected from the group consisting of *Bifidobacterium* and *Lactobacillus rhamnosus.*

9. The fermented dairy product according to any one of claims 7-8, wherein the helper strain is a bacterial strain capable of reducing the redox potential (Eh) of sterilized skim milk to -200 mV or lower (more negative) values upon incubation of sterilized skim milk with said helper strain for 5-24 hours at 25-33 °C,.

10. The fermented dairy product according to any one of claims 7-9, wherein the helper strain is not capable of reducing the redox potential (Eh) of sterilized skim milk to -50 mV or more negative values upon incubation of sterilized skim milk with said helper strain for 5 hours at 42 °C.

11. The fermented dairy product according to claim any one of claims 7-10, wherein the helper strain comprises a strain of *Lactococcus lactis* spp. *lactis.*

12. Use of a helper strain for preparing a fermented dairy product milk, wherein the helper strain is a bacterial strain capable of reducing the redox potential (Eh) of sterilized skim milk to -50 mV or lower values upon incubation of sterilized skim milk with said helper strain for 5-24 hours at 25-33 °C and wherein the helper strain is not capable of reducing the redox potential (Eh) of sterilized skim milk to -50 mV or more negative values upon incubation of sterilized skim milk with said helper strain for 5 hours at 42 °C and wherein the helper strain is a Gram positive, non-spore-forming, anaerobic, catalase negative lactococcal strain forming lactic acid as an end product of its carbohydrate metabolism, and the helper strain is mesophilic, and wherein at least one of the following provisos applies:

   i. the incubation temperature is 40-45 °C; and/or
   ii. the incubation temperature is 37-45 °C, and the helper strain is not selected from the group consisting of
   *Lactococcus lactis* DSM21407 or a mutant or a variant thereof,
   *Lactococcus lactis* DSM21406 or a mutant or a variant thereof,
   *Lactococcus lactis* subsp. *lactis* MCC852 (FERM BP-10742);
   *Lactococcus lactis* subsp. *lactis* MCC857 (FERM BP-10757);
   *Lactococcus lactis* subsp. *lactis* MCC859 (FERM BP-10744);
   *Lactococcus lactis* subsp. *lactis* MCC865 (FERM BP-10745); and

*Lactococcus lactis* subsp. *lactis* MCC856 (FERM BP-10746).

13. Viable bacteria comprising

- a yogurt starter culture comprising a strain of *Streptococcus thermophilus* in combination with a strain of *Lactobacillus delbrueckii* spp. *bulgaricus* and/or a strain of *Lactobacillus acidophilus*; and
- a helper strain, wherein the helper strain is a bacterial strain capable of reducing the redox potential (Eh) of sterilized skim milk to -50 mV or lower values upon incubation of sterilized skim milk with said helper strain for 5-24 hours at 25-33 °C,

wherein the helper strain is a Gram positive, non-spore-forming, anaerobic, catalase negative lactococcal strain forming lactic acid as an end product of its carbohydrate metabolism, and the helper strain is mesophilic, and wherein the helper strain is strain is not selected from the group consisting of
*Lactococcus lactis* DSM21407 or a mutant or a variant thereof;
*Lactococcus lactis* DSM21406 or a mutant or a variant thereof;
*Lactococcus lactis* subsp. *lactis* MCC852 (FERM BP-10742);
*Lactococcus lactis* subsp. *lactis* MCC857 (FERM BP-10757);
*Lactococcus lactis* subsp. *lactis* MCC859 (FERM BP-10744);
*Lactococcus lactis* subsp. *lactis* MCC865 (FERM BP-10745); and
*Lactococcus lactis* subsp. *lactis* MCC856 (FERM BP-10746).


## Patentansprüche

1. Verfahren zum Herstellen eines fermentierten Milchprodukts, welches die Schritte umfasst:

   a. Bereitstellen von Milch;
   b. Bereitstellen von lebensfähigen Bakterien von jeweils einer Joghurtstarterkultur und einem Helferstamm; wobei die Joghurtstarterkultur einen Stamm von *Streptococcus thermophilus* in Kombination mit einem Stamm von *Lactobacillus delbrueckii* spp. *bulgaricus* und/oder einem Stamm von *Lactobacillus acidophilus* umfasst; und wobei der Helferstamm ein Bakterienstamm ist, der das Redoxpotential (Eh) von sterilisierter entrahmter Milch bei Inkubation der sterilisierten entrahmten Milch mit besagtem Helferstamm für 5 - 24 Stunden bei 25 - 33°C auf -50 mV oder niedrigere Werte reduzieren kann;
   c. Zufügen besagter lebensfähiger Bakterien zu besagter Milch, wodurch beimpfte Milch bereitgestellt wird; und
   d. Inkubieren der beimpften Milch, bis der pH-Wert der Zusammensetzung auf 5,0 oder niedriger gefallen ist, wodurch das fermentierte Milchprodukt erhalten wird;

   wobei der Helferstamm ein Gram-positiver, nicht-Sporen-bildender, anaerober, Katalase-negativer Lactococcal-Stamm ist, der Milchsäure als ein Endprodukt seines Kohlenhydratmetabolismus bildet, und wobei der Helferstamm mesophil ist, und wobei wenigstens eine der folgenden Maßgaben zutrifft:

   i. die beimpfte Milch in (d) wird bei einer Temperatur von 40 - 45°C inkubiert;
   ii. die beimpfte Milch in (d) wird bei einer Temperatur von 37 - 45°C inkubiert, und der Helferstamm wird nicht ausgewählt aus der Gruppe bestehend aus
   *Lactococcus lactis* DSM21407 oder einem Mutanten oder einer Variante desselben,
   *Lactococcus lactis* DSM21406 oder einem Mutanten oder einer Variante desselben,
   *Lactococcus lactis* subsp. *lactis* MCC852 (FERM BP-10742);
   *Lactococcus lactis* subsp. *lactis* MCC857 (FERM BP-10757);
   *Lactococcus lactis* subsp. *lactis* MCC859 (FERM BP-10744);
   *Lactococcus lactis* subsp. *lactis* MCC865 (FERM BP-10745); und
   *Lactococcus lactis* subsp. *lactis* MCC856 (FERM BP-10746).

2. Verfahren nach Anspruch 1, wobei Schritt (b) ferner ein Bereitstellen einer weiteren probiotischen Kultur umfasst, die einen oder mehrere Stämme ausgewählt aus der Gruppe bestehend aus *Bifidobacterium* und *Lactobacillus rhamnosus* umfasst.

3. Verfahren nach einem der vorangehenden Ansprüche, wobei der Helferstamm ein Bakterienstamm ist, der das Redoxpotential (Eh) von sterilisierter entrahmter Milch bei Inkubation der sterilisierten entrahmten Milch mit besagtem Helferstamm für 5 - 24 Stunden bei 25 - 33°C auf -200 mV oder niedrigere Werte reduzieren kann.

4. Verfahren nach einem der vorangehenden Ansprüche, wobei die beimpfte Milch in (d) bei einer Temperatur von 40 - 45°C, bevorzugt bei einer Temperatur von 42 - 45°C inkubiert wird.

5. Verfahren nach einem der vorangehenden Ansprüche, wobei der Helferstamm das Redoxpotential (Eh) von sterilisierter entrahmter Milch auf -50 mV oder stärker negative Werte bei Inkubation der sterilisierten entrahmten Milch mit besagtem Helferstamm für 5 Stunden bei 42°C nicht reduzieren kann.

6. Verfahren nach einem der vorangehenden Ansprüche, wobei der Helferstamm nicht ausgewählt wird aus der Gruppe bestehend aus
*Lactococcus lactis* DSM21407 oder einem Mutanten oder einer Variante desselben,
*Lactococcus lactis* DSM21406 oder einem Mutanten oder einer Variante desselben,
*Lactococcus lactis* subsp. *lactis* MCC852 (FERM BP-10742);
*Lactococcus lactis* subsp. *lactis* MCC857 (FERM BP-10757);
*Lactococcus lactis* subsp. *lactis* MCC859 (FERM BP-10744);
*Lactococcus lactis* subsp. *lactis* MCC865 (FERM BP-10745); und
*Lactococcus lactis* subsp. *lactis* MCC856 (FERM BP-10746).

7. Fermentiertes Milchprodukt, bevorzugt ein Joghurt, umfassend lebensfähige Bakterien von:

- einer Joghurtstarterkultur umfassend einen Stamm von *Streptococcus thermophilus* in Kombination mit einem Stamm von *Lactobacillus delbrueckii* spp. *bulgaricus* und/oder einem Stamm von *Lactobacillus acidophilus;* und
- einem Helferstamm, wobei der Helferstamm ein Bakterienstamm ist, der das Redoxpotential (Eh) von sterilisierter entrahmter Milch bei Inkubation der sterilisierten entrahmten Milch mit besagtem Helferstamm für 5 - 24 Stunden bei 25 - 33°C auf -50 mV oder niedrigere Werte reduzieren kann;

wobei der Helferstamm ein Gram-positiver, nicht-Sporen-bildender, anaerober, Katalase-negativer Lactococcal-Stamm ist, der Milchsäure als ein Endprodukt seines Kohlenhydratmetabolismus bildet, und wobei besagter Helferstamm mesophil ist, und wobei der Helferstamm nicht ausgewählt ist aus der Gruppe bestehend aus
*Lactococcus lactis* DSM21407,
*Lactococcus lactis* DSM21406,
*Lactococcus lactis* subsp. *lactis* MCC852 (FERM BP-10742);
*Lactococcus lactis* subsp. *lactis* MCC857 (FERM BP-10757);
*Lactococcus lactis* subsp. *lactis* MCC859 (FERM BP-10744);
*Lactococcus lactis* subsp. *lactis* MCC865 (FERM BP-10745); und
*Lactococcus lactis* subsp. *lactis* MCC856 (FERM BP-10746).

8. Fermentiertes Milchprodukt nach Anspruch 7, welches ferner eine probiotische Kultur umfasst, die einen oder mehrere Stämme ausgewählt aus der Gruppe bestehend aus *Bifidobacterium* und *Lactobacillus rhamnosus* umfasst.

9. Fermentiertes Milchprodukt nach einem der Ansprüche 7 - 8, wobei der Helferstamm ein Bakterienstamm ist, der das Redoxpotential (Eh) von sterilisierter entrahmter Milch bei Inkubation der sterilisierten entrahmten Milch mit besagtem Helferstamm für 5 - 24 Stunden bei 25 - 33°C auf -200 mV oder niedrigere (stärker negative) Werte reduzieren kann.

10. Fermentiertes Milchprodukt nach einem der Ansprüche 7 - 9, wobei der Helferstamm das Redoxpotential (Eh) von sterilisierter entrahmter Milch bei Inkubation der sterilisierten entrahmten Milch mit besagtem Helferstamm für 5 Stunden bei 42°C nicht auf -50 mV oder stärker negative Werte reduzieren kann.

11. Fermentiertes Milchprodukt nach einem der Ansprüche 7 - 10, wobei der Helferstamm einen Stamm von *Lactococcus lactis* spp. *lactis* umfasst.

12. Verwendung eines Helferstamms zum Herstellen eines fermentierten Milchprodukts, wobei der Helferstamm ein Bakterienstamm ist, der das Redoxpotential (Eh) von sterilisierter entrahmter Milch bei Inkubation der sterilisierten entrahmten Milch mit besagtem Helferstamm für 5 - 24 Stunden bei 25 - 33 °C auf -50 mV oder niedrigere Werte reduzieren kann, und wobei der Helferstamm das Redoxpotential (Eh) von sterilisierter entrahmter Milch bei Inkubation der sterilisierten entrahmten Milch mit besagtem Helferstamm für 5 Stunden bei 42°C nicht auf -50 mV oder stärker negative Werte reduzieren kann, und wobei der Helferstamm ein Gram-positiver, nicht-Sporen-bildender, anaerober, Katalase-negativer Lactococcal-Stamm ist, der Milchsäure als ein Endprodukt seines Kohlenhydratmetabolismus bildet, und wobei der Helferstamm mesophil ist, und wobei wenigstens eine der folgenden Maßgaben zutrifft:

i. die Inkubationstemperatur ist 40 - 45°C; und/oder
ii. die Inkubationstemperatur ist 37 - 45°C, und der Helferstamm ist nicht ausgewählt aus der Gruppe bestehend aus

*Lactococcus lactis* DSM21407 oder einem Mutanten oder einer Variante desselben,
*Lactococcus lactis* DSM21406 oder einem Mutanten oder einer Variante desselben,
*Lactococcus lactis* subsp. *lactis* MCC852 (FERM BP-10742);
*Lactococcus lactis* subsp. *lactis* MCC857 (FERM BP-10757);
*Lactococcus lactis* subsp. *lactis* MCC859 (FERM BP-10744);
*Lactococcus lactis* subsp. *lactis* MCC865 (FERM BP-10745); und
*Lactococcus lactis* subsp. *lactis* MCC856 (FERM BP-10746).

13. Lebensfähige Bakterien, welche umfassen

- eine Joghurtstarterkultur umfassend einen Stamm aus *Streptococcus thermophilus* in Kombination mit einem Stamm von *Lactobacillus delbrueckii* spp. *bulgaricus* und/oder einem Stamm von *Lactobacillus acidophilus;* und
- einen Helferstamm, wobei der Helferstamm ein Bakterienstamm ist, der das Redoxpotential (Eh) von sterilisierter entrahmter Milch bei Inkubation von sterilisierter entrahmter Milch mit besagtem Helferstamm für 5 - 24 Stunden bei 25 - 33°C auf -50 mV oder niedrigere Werte reduzieren kann,

wobei der Helferstamm ein Gram-positiver, nicht-Sporen-bildender, anaerober, Katalase-negativer Lactococcal-Stamm ist, der Milchsäure als ein Endprodukt seines Kohlenhydratmetabolismus bildet, und wobei der Helferstamm mesophil ist, und wobei der Helferstamm nicht ausgewählt ist aus der Gruppe bestehend aus
*Lactococcus lactis* DSM21407 oder einem Mutanten oder einer Variante desselben,
*Lactococcus lactis* DSM21406 oder einem Mutanten oder einer Variante desselben,
*Lactococcus lactis* subsp. *lactis* MCC852 (FERM BP-10742);
*Lactococcus lactis* subsp. *lactis* MCC857 (FERM BP-10757);
*Lactococcus lactis* subsp. *lactis* MCC859 (FERM BP-10744);
*Lactococcus lactis* subsp. *lactis* MCC865 (FERM BP-10745); und
*Lactococcus lactis* subsp. *lactis* MCC856 (FERM BP-10746).

**Revendications**

1. Procédé de préparation d'un produit laitier fermenté, comprenant les étapes consistant à :

a. fournir du lait ;
b. fournir des bactéries viables d'une culture de démarrage de yaourt et d'une souche auxiliaire ; la culture de démarrage de yaourt comportant une souche de *Streptococcus thermophilus* en combinaison avec une souche de *Lactobacillus delbrueckii* spp. *bulgaricus* et/ou une souche de *Lactobacillus acidophilus ;* et la souche auxiliaire étant une souche bactérienne capable de réduire le potentiel redox (Eh) de lait écrémé stérilisé à -50 mV ou à des valeurs inférieures lors de l'incubation du lait écrémé stérilisé avec ladite souche auxiliaire durant 5-24 heures à 25-33°C ;
c. ajouter lesdites bactéries viables audit lait, de manière à former du lait inoculé ; et
d. incuber le lait inoculé jusqu'à ce que le pH de la composition descende à 5,0 ou moins, ce qui donne le produit laitier fermenté ;

la souche auxiliaire étant une souche lactocoque catalase négative, anaérobie, non sporogène, gram positif, formant de l'acide lactique en tant que produit final de son métabolisme des hydrates de carbone, et la souche auxiliaire étant mésophile, et au moins l'une des conditions suivantes étant appliquées :

i. le lait inoculé en (d) est incubé à une température de 40-45°C ;
ii. le lait inoculé en (d) est incubé à une température de 37-45°C, et la souche auxiliaire n'est pas choisie dans le groupe comportant

*Lactococcus lactis* DSM21407 ou un mutant ou un variant de celui-ci,
*Lactococcus lactis* DSM21406 ou un mutant ou un variant de celui-ci,
*Lactococcus lactis* subsp. *lactis* MCC852 (FERM BP-10742) ;
*Lactococcus lactis* subsp. *lactis* MCC857 (FERM BP-10757) ;
*Lactococcus lactis* subsp. *lactis* MCC859 (FERM BP-10744) ;
*Lactococcus lactis* subsp. *lactis* MCC865 (FERM BP-10745) ; et
*Lactococcus lactis* subsp. *lactis* MCC856 (FERM BP-10746).

2. Procédé selon la revendication 1, dans lequel l'étape (b) comprend en outre l'utilisation d'une autre culture probiotique comprenant une ou plusieurs souches sélectionnées dans le groupe comprenant *Bifidobacterium* et *Lactobacillus rhamnosus.*

3. Procédé selon l'une quelconque des revendications précédentes, dans lequel la souche auxiliaire est une souche bactérienne capable de réduire le potentiel redox (Eh) du lait écrémé stérilisé à -200 mV ou à des valeurs inférieures lors de l'incubation du lait écrémé stérilisé avec ladite souche auxiliaire pendant 5-24 heures à une température de 25-33°C.

4. Procédé selon l'une quelconque des revendications précédentes, dans lequel le lait inoculé en (d) est incubé à une température de 40-45°C, de préférence à une température de 42-45°C.

5. Procédé selon l'une quelconque des revendications précédentes, dans lequel la souche auxiliaire n'est pas capable de réduire le potentiel redox (Eh) du lait écrémé stérilisé à -50 mV ou des valeurs plus négatives lors de l'incubation du lait écrémé stérilisé avec ladite souche auxiliaire pendant 5 heures à 42°C.

6. Procédé selon l'une quelconque des revendications précédentes, dans lequel la souche auxiliaire n'est pas choisie dans le groupe comprenant
*Lactococcus lactis* DSM21407 ou un mutant ou un variant de celui-ci,
*Lactococcus lactis* DSM21406 ou un mutant ou un variant de celui-ci,
*Lactococcus lactis* subsp. *lactis* MCC852 (FERM BP-10742) ;
*Lactococcus lactis* subsp. *lactis* MCC857 (FERM BP-10757) ;
*Lactococcus lactis* subsp. *lactis* MCC859 (FERM BP-10744) ;
*Lactococcus lactis* subsp. *lactis* MCC865 (FERM BP-10745) ; et
*Lactococcus lactis* subsp. *lactis* MCC856 (FERM BP-10746).

7. Produit laitier fermenté, de préférence un yaourt, comprenant des bactéries viables de :

- une culture de démarrage de yogourt comprenant une souche de *Streptococcus thermophilus* en combinaison avec une souche de *Lactobacillus delbrueckii* spp. *bulgaricus* et/ou une souche de *Lactobacillus acidophilus ;* et
- une souche auxiliaire, la souche auxiliaire étant une souche bactérienne capable de réduire le potentiel redox (Eh) du lait écrémé stérilisé à -50 mV ou à des valeurs inférieures lors de l'incubation du lait écrémé stérilisé avec ladite souche auxiliaire pendant 5-24 heures à une température de 25-33°C ;

la souche auxiliaire étant une souche lactocoque catalase négative, anaérobie, non sporogène, gram positif formant de l'acide lactique en tant que produit final de son métabolisme des hydrates de carbone, et la souche auxiliaire étant mésophile, et la souche auxiliaire n'étant pas choisie dans le groupe comprenant
*Lactococcus lactis* DSM21407,
*Lactococcus lactis* DSM21406,
*Lactococcus lactis* subsp. *lactis* MCC852 (FERM BP-10742) ;
*Lactococcus lactis* subsp. *lactis* MCC857 (FERM BP-10757) ;
*Lactococcus lactis* subsp. *lactis* MCC859 (FERM BP-10744) ;
*Lactococcus lactis* subsp. *lactis* MCC865 (FERM BP-10745) ; et
*Lactococcus lactis* subsp. *lactis* MCC856 (FERM BP-10746).

8. Produit laitier fermenté selon la revendication 7, qui comprend en outre une culture probiotique comprenant une ou plusieurs souches sélectionnées dans le groupe comprenant *Bifidobacterium* et *Lactobacillus rhamnosus.*

9.  Produit laitier fermenté selon l'une quelconque des revendications 7 à 8, dans lequel la souche auxiliaire est une souche bactérienne capable de réduire le potentiel redox (Eh) du lait écrémé stérilisé à -200 mV ou à des valeurs inférieures (plus négatives) lors de l'incubation du lait stérilisé écrémé avec ladite souche auxiliaire pendant 5-24 heures à une température de 25-33°C.

10. Produit laitier fermenté selon l'une quelconque des revendications 7 à 9, dans lequel la souche auxiliaire n'est pas capable de réduire le potentiel redox (Eh) du lait écrémé stérilisé à -50 mV ou des valeurs plus négatives lors de l'incubation de lait écrémé stérilisé avec ladite souche auxiliaire pendant 5 heures à 42°C.

11. Produit laitier fermenté selon l'une quelconque des revendications 7 à 10, dans lequel la souche auxiliaire comprend une souche de *Lactococcus lactis* spp. *lactis.*

12. Utilisation d'une souche auxiliaire pour préparer du lait pour produit laitier fermenté, dans laquelle la souche auxiliaire est une souche bactérienne capable de réduire le potentiel redox (Eh) du lait écrémé stérilisé à -50 mV ou à des valeurs inférieures lors de l'incubation du lait écrémé stérilisé avec ladite souche auxiliaire pendant 5-24 heures à une température de 25-33°C et dans laquelle la souche auxiliaire n'est pas capable de réduire le potentiel redox (Eh) du lait écrémé stérilisé à -50 mV ou à des valeurs plus négatives lors de l'incubation du lait écrémé stérilisé avec ladite souche auxiliaire pendant 5 heures à 42°C et dans laquelle la souche auxiliaire est une souche lactocoque catalase négative, anaérobie, non sporogène, gram positif, formant de l'acide lactique en tant que produit final de son métabolisme des hydrates de carbone, et la souche auxiliaire étant mésophile, et au moins l'une des conditions suivantes étant appliquées :

    i. la température d'incubation est de 40-45°C ; et/ou
    ii. la température d'incubation est de 37-45°C, et la souche auxiliaire n'est pas choisie dans le groupe comprenant

    *Lactococcus lactis* DSM21407 ou un mutant ou un variant de celui-ci,
    *Lactococcus lactis* DSM21406 ou un mutant ou un variant de celui-ci,
    *Lactococcus lactis* subsp. *lactis* MCC852 (FERM BP-10742) ;
    *Lactococcus lactis* subsp. *lactis* MCC857 (FERM BP-10757) ;
    *Lactococcus lactis* subsp. *lactis* MCC859 (FERM BP-10744) ;
    *Lactococcus lactis* subsp. *lactis* MCC865 (FERM BP-10745) ; et
    *Lactococcus lactis* subsp. *lactis* MCC856 (FERM BP-10746).

13. Bactérie viable comprenant

    - une culture de démarrage de yaourt comportant une souche de *Streptococcus thermophilus* en combinaison avec une souche de *Lactobacillus delbrueckii* spp. *bulgaricus* et/ou une souche de *Lactobacillus acidophilus ;* et
    - une souche auxiliaire, la souche auxiliaire étant une souche bactérienne capable de réduire le potentiel redox (Eh) du lait écrémé stérilisé à -50 mV ou à des valeurs inférieures lors de l'incubation de lait écrémé stérilisé avec ladite souche auxiliaire pendant 5-24 heures à 25-33°C ;

    la souche auxiliaire étant une souche lactocoque catalase négative, anaérobie, non sporogène, gram positif, formant de l'acide lactique en tant que produit final de son métabolisme des hydrates de carbone, et la souche auxiliaire étant mésophile, et la souche auxiliaire n'étant pas choisie dans le groupe comprenant
    *Lactococcus lactis* DSM21407 ou un mutant ou un variant de celui-ci,
    *Lactococcus lactis* DSM21406 ou un mutant ou un variant de celui-ci,
    *Lactococcus lactis* subsp. *lactis* MCC852 (FERM BP-10742) ;
    *Lactococcus lactis* subsp. *lactis* MCC857 (FERM BP-10757) ;
    *Lactococcus lactis* subsp. *lactis* MCC859 (FERM BP-10744) ;
    *Lactococcus lactis* subsp. *lactis* MCC865 (FERM BP-10745) ; et
    *Lactococcus lactis* subsp. *lactis* MCC856 (FERM BP-10746).

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0985043 A
- WO 2008148561 A1
- EP 2112219 A1
- EP 2010023290 A2
- WO 9854337 A
- WO 2010023290 A
- EP 2112219 A
- WO 2008058854 A

**Non-patent literature cited in the description**

- **A. LOURENS-HATTINGH et al.** Yogurt as probiotic carrier food. *International Dairy Journal,* 2001, vol. 11, 1-17
- **M. BRASCA et al.** Redox potential to discriminate among species of lactic acid bacteria. *J. Applied Microbiology,* 2007, vol. 103, 1516-1524
- **R. CACHON et al.** *Lait,* 2002, vol. 82, 281-288
- **M. BRASCA et al.** *J. Applied Microbiology,* 2007, vol. 103, 1516-1524
- **TOMATORI MITSUOKA.** The bacteriology of lactic acid bacteria. *Clinical Examination,* 1974, vol. 18, 1163-1172